(19) Europäisches Patentamt / European Patent Office / Office européen des brevets

(11) **EP 4 005 895 B1**

(12) **FASCICULE DE BREVET EUROPEEN**

(45) Date de publication et mention de la délivrance du brevet:
**04.09.2024 Bulletin 2024/36**

(21) Numéro de dépôt: **21210647.0**

(22) Date de dépôt: **26.11.2021**

(51) Classification Internationale des Brevets (IPC):
***B60W 60/00*** *(2020.01)*

(52) Classification Coopérative des Brevets (CPC):
**B60W 60/00272; B60W 60/00276**

(54) **PROCÉDÉ DE CONTRÔLE D'UN VÉHICULE AUTONOME POUR TOUT TYPE DE SCÉNARIO**

VERFAHREN ZUR STEUERUNG EINES AUTONOMEN FAHRZEUGS FÜR ALLE ARTEN VON SZENARIEN

METHOD FOR CONTROLLING AN AUTONOMOUS VEHICLE FOR ALL TYPES OF SCENARIO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2020 FR 2012377**

(43) Date de publication de la demande:
**01.06.2022 Bulletin 2022/22**

(73) Titulaire: **Ampere SAS**
**92100 Boulogne-Billancourt (FR)**

(72) Inventeurs:
- **GONZALEZ BAUTISTA, David**
  **78084 GUYANCOURT (FR)**
- **MILANES, Vicente**
  **78084 GUYANCOURT (FR)**
- **NAVAS MATOS, Francisco Martin**
  **75013 PARIS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
GB-A- 2 558 051          US-A1- 2009 088 925
US-A1- 2018 354 518

- **JULIA NILSSON ET AL: "Lane Change Maneuvers for Automated Vehicles", IEEE TRANSACTIONS ON INTELLIGENT TRANSPORTATION SYSTEMS, vol. 18, no. 5, 1 May 2017 (2017-05-01), Piscataway, NJ, USA, pages 1087 - 1096, XP055748521, ISSN: 1524-9050, DOI: 10.1109/TITS.2016.2597966**

**EP 4 005 895 B1**

**Description**

**Domaine Technique de l'invention**

L'invention concerne un procédé de contrôle automatique d'un véhicule automobile. L'invention porte aussi sur un véhicule automobile comprenant des moyens matériels et logiciels configurés pour mettre en oeuvre un tel procédé de contrôle.

**Etat de la technique antérieure**

Le contrôle des véhicules automobiles autonomes repose généralement sur des moyens de détection embarqués aptes à détecter différents obstacles fixes ou mobiles dans l'environnement du véhicule. Ces moyens de détection sont reliés à une unité de contrôle apte à agir sur la direction et sur la vitesse du véhicule. Lorsqu'un véhicule autonome doit s'insérer dans une voie de circulation, comme par exemple une voie de circulation de rond-point, il détecte les différents obstacles et les compare à une trajectoire prévue. Si l'obstacle se situe sur la trajectoire prévue ou à trop faible distance de celle-ci, le véhicule autonome s'arrête et patiente jusqu'à ce que sa trajectoire soit dégagée. Si la trajectoire du véhicule prévue est libre de tout obstacle, alors il s'engage sur ladite voie de circulation.

Un tel procédé de contrôle ne permet pas de s'insérer efficacement sur tout type de voie de circulation ou de franchir efficacement tout type de carrefour. En particulier, un tel procédé de contrôle ne parvient pas ou difficilement à réaliser une insertion fluide du véhicule autonome sur un rond-point, de surcroît si la circulation est dense.

On connaît par la publication GB2558051A un procédé de contrôle de véhicule autonome comprenant les étapes consistant à :

- projeter un premier véhicule fantôme dans une branche ou une voie circulaire d'un rond-point en association avec un premier véhicule autonome,
- amener le véhicule autonome à entrer dans la voie circulaire du rond-point lorsqu'une absence de collision est prédite avec les véhicules qui arrivent, et
- amener le véhicule autonome à sortir du rond-point en fusionnant le véhicule autonome et le véhicule fantôme dès que le véhicule autonome entre dans le rond-point.

Un peloton de véhicules fantômes peut être créé pour former une file d'attente de véhicules entrant dans le rond-point pour contrôler le flux de véhicules sur le rond-point. Toutefois, ce procédé est encore trop peu efficace et le contrôle du véhicule autonome est saccadé, ce qui produit un inconfort des passagers. De plus, ce procédé ne permet d'aborder que le cas particulier du franchissement de ronds-points. Enfin, il est complexe car il nécessite des échanges entre les véhicules pour contrôler la file d'attente de véhicules.

Le document US2018/354518A divulgue une procédé présentant des inconvénients analogues.

**Présentation de l'invention**

Le but de l'invention est de fournir un procédé de contrôle automatique d'un véhicule remédiant aux inconvénients ci-dessus et améliorant les procédés de contrôle connus de l'art antérieur.

Plus précisément, un premier objet de l'invention est un procédé de contrôle automatique d'un véhicule qui permet une insertion fluide du véhicule dans une voie de circulation, notamment dans une voie de circulation de rond-point.

Un second objet de l'invention est procédé de contrôle automatique du véhicule facile à prévoir pour les autres automobilistes.

**Résumé de l'invention**

L'invention se rapporte à un procédé de contrôle automatique d'un premier véhicule automobile, le procédé de contrôle comprenant :

- une étape de détection d'un ensemble d'obstacles mobiles environnant le premier véhicule,
- une étape de définition d'une voie de circulation virtuelle, puis
- une étape de définition d'obstacles virtuels par une projection des obstacles mobiles dans la voie de circulation virtuelle,
- une étape de détermination de positions futures des obstacles virtuels dans la voie de circulation virtuelle,
- une étape de détermination de délais d'interaction des obstacles virtuels avec le premier véhicule,
- une étape de contrôle du premier véhicule en fonction des délais d'interaction des obstacles virtuels avec le premier

2

véhicule.

L'étape de contrôle peut être configurée pour que le premier véhicule se positionne entre deux obstacles virtuels.

Le procédé de contrôle peut comprendre une étape de définition d'une unique cible virtuelle parmi l'ensemble d'obstacles virtuels et l'étape de contrôle peut être configurée pour que le premier véhicule suive la cible virtuelle dans la voie de circulation virtuelle.

Le procédé de contrôle peut comprendre une étape de reconnaissance d'une configuration routière et les positions futures des obstacles virtuels dans la voie de circulation virtuelle peuvent être déterminées en fonction de ladite configuration routière.

L'étape de contrôle du premier véhicule peut être une étape d'insertion du premier véhicule dans une voie de circulation, les obstacles mobiles présents dans la voie de circulation étant prioritaires sur le premier véhicule.

L'étape de contrôle du premier véhicule peut être une étape d'insertion du premier véhicule dans une voie de circulation circulaire d'un rond-point.

Selon l'invention, les positions futures d'un obstacle virtuel dans la voie de circulation virtuelle sont déterminées en fonction de données de position, de vitesse, d'accélération et de jerk d'un obstacle mobile correspondant l'obstacle virtuel, à un instant donné.

L'invention se rapporte également à un véhicule automobile comprenant des moyens de détection automatique de l'environnement, des moyens de contrôle automatique de la vitesse et de la direction du véhicule, le véhicule étant configuré pour mettre en oeuvre le procédé de contrôle tel que défini précédemment.

L'invention se rapporte aussi à un produit programme d'ordinateur comprenant des instructions de code de programme enregistrées sur un support lisible par ordinateur pour mettre en oeuvre les étapes du procédé tel que défini précédemment lorsque ledit programme fonctionne sur un ordinateur. L'invention se rapporte aussi à un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en oeuvre le procédé tel que défini précédemment.

L'invention se rapporte encore à un support d'enregistrement de données, lisible par un ordinateur, sur lequel est enregistré un programme d'ordinateur comprenant des instructions de code de programme de mise en oeuvre du procédé tel que défini précédemment. L'invention se rapporte encore à un support d'enregistrement lisible par ordinateur comprenant des instructions qui, lorsqu'elles sont exécutées par un ordinateur, conduisent celui-ci à mettre en oeuvre le procédé tel que défini précédemment.

Enfin, l'invention se rapporte à un signal d'un support de données, portant le produit programme d'ordinateur tel que défini précédemment.

**Présentation des figures**

Ces objets, caractéristiques et avantages de la présente invention seront exposés en détail dans la description suivante d'un mode de réalisation particulier fait à titre non-limitatif en relation avec les figures jointes parmi lesquelles :

[Fig. 1] La figure 1 est une vue schématique d'un premier véhicule automobile selon un mode de réalisation de l'invention.

[Fig. 2] La figure 2 est un synoptique d'un procédé de contrôle automatique du premier véhicule selon un mode de réalisation de l'invention.

[Fig. 3] La figure 3 est une vue schématique de dessus d'une première configuration routière dans laquelle le premier véhicule est à l'approche d'un rond-point.

[Fig. 4] La figure 4 est une vue schématique d'une voie de circulation virtuelle avant la mise en oeuvre d'une étape de contrôle du premier véhicule.

[Fig. 5] La figure 5 est une vue schématique de la voie de circulation virtuelle après la mise en oeuvre de l'étape de contrôle du premier véhicule.

[Fig. 6] La figure 6 est une vue schématique de dessus d'une deuxième configuration routière dans laquelle le premier véhicule est dans une voie d'insertion rejoignant une voie de circulation principale.

[Fig. 7] La figure 7 est un graphique illustrant la distance séparant le premier véhicule d'obstacles mobiles comparée à la distance séparant le premier véhicule d'obstacles virtuels dans une voie de circulation virtuelle, en fonction du temps.

[Fig. 8] La figure 8 est un graphique illustrant les vitesses du premier véhicule et les vitesses d'obstacles mobiles.

[Fig. 9] La figure 9 est un graphique illustrant les accélérations du premier véhicule et les accélérations d'obstacles mobiles.

**Description détaillée**

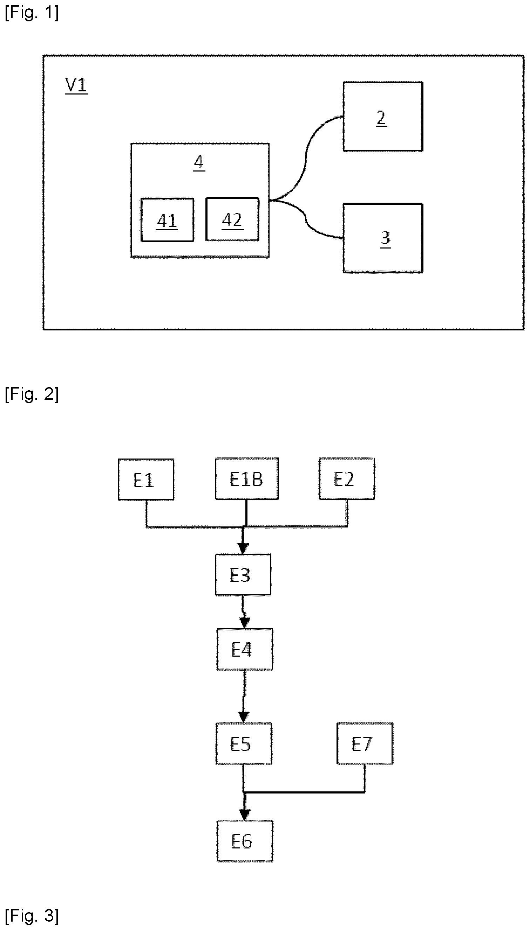

La figure 1 illustre schématiquement un premier véhicule V1 automobile selon un mode de réalisation de l'invention. Le véhicule V1 peut être de toute nature. Notamment, il peut être un véhicule particulier, un véhicule utilitaire, un camion ou un bus. Le véhicule V1 comprend des moyens de détection 2 automatique de l'environnement, tels que par exemple des radars, des lidars ou des caméras. Ces moyens sont aptes à reconnaitre les voies de circulations empruntables par le véhicule V1, des obstacles fixes et également des obstacles mobiles comme par exemple d'autres véhicules, des cyclistes ou des piétons.

Le véhicule V1 comprend également des moyens de contrôle 3 automatique de la vitesse et de la direction du véhicule. Ces moyens de contrôle 3 peuvent notamment agir sur le couple fourni par un moteur du véhicule, sur des moyens de freinage du véhicule et sur un système de direction du véhicule.

Le véhicule V1 comprend aussi une unité de contrôle électronique 4 équipée d'un microprocesseur 41 et d'une mémoire 42. Cette unité de contrôle électronique 4 est reliée aux moyens de détection 2 et aux moyens de contrôle 3. Notamment, l'unité de contrôle électronique 4 est apte à prendre en compte les différents obstacles détectés par les moyens de détection 2 pour émettre des ordres de commande à destination des moyens de contrôle 3. Ainsi, le véhicule V1 est un véhicule autonome : il peut suivre automatiquement une trajectoire, sans l'aide d'un conducteur, sur des voies de circulation ouvertes à d'autres véhicules ou usagers de la route.

La mémoire 42 de l'unité de contrôle électronique 4 est un support d'enregistrement de données sur lequel est enregistré un programme d'ordinateur comprenant des instructions de code de programme de mise en oeuvre d'un procédé de contrôle automatique du premier véhicule V1 selon un mode de réalisation de l'invention. Le microprocesseur 41 est apte à exécuter ce programme d'ordinateur.

Un mode de réalisation d'un procédé de contrôle automatique du premier véhicule V1 va maintenant être décrit en référence à la figure 2. Pour illustrer ce procédé, on peut considérer la configuration illustrée sur la figure 3 dans laquelle le véhicule V1 circule sur une voie de circulation VCR1 et aborde un rond-point RP. Le rond-point RP comprend une voie de circulation circulaire VCC qui dessert les voies de circulation radiales VCR1, VCR2, VCR3. On considère par ailleurs que trois autres véhicules V2, V3, V4, différents du premier véhicule V1, circulent sur les voies de circulation VCC, VCR2 ou VCR3. Selon l'illustration de la figure 3, le rond-point comprend trois voies de circulation radiales et trois véhicules V2, V3, V4 constituent l'environnement mobile du premier véhicule V1 mais en variante ces nombres pourraient être différents. Le premier véhicule V1 suit une première trajectoire T1 allant de la voie de circulation radiale VCR1 à la voie de circulation radiale VCR2. Les véhicules V2, V3 et V4 suivent une même deuxième trajectoire T2 allant de la voie de circulation radiale VCR3 à la voie de circulation radiale VCR2. On considère que le rond-point est emprunté dans un sens antihoraire, illustré par une flèche F1. Le procédé vise donc à obtenir une insertion fluide et sans risque de collision du véhicule V1 sur la voie de circulation circulaire VCC. Pour ce faire, le véhicule V1 devra s'insérer parmi les véhicules V2, V3 et V4 qui sont prioritaires. Par véhicule prioritaire, on comprend que, en appliquant le code de la route, les véhicules V2, V3 et V4 ne doivent pas céder le passage au véhicule V1.

Dans une première étape E1, on détecte un ensemble d'obstacles mobiles environnant le premier véhicule V1. Selon la configuration de la figure 3, on détecte donc les trois véhicules V2, V3 et V4. En variante, ces obstacles mobiles pourraient être non pas des véhicules automobiles mais des piétons ou des cyclistes ou encore tout autre type d'obstacle mobile. Cette détection est réalisée avec les moyens de détection 2 du véhicule V1. Outre la présence des obstacles mobiles, on peut déterminer pour chacun des véhicules V2, V3 et V4 leur position instantanée sa, leur vitesse instantanée V0, leur accélération instantanée A0 et leur jerk instantané J0 (le jerk étant la dérivée par rapport au temps de l'accélération). Ces données S0, V0, A0 et J0 peuvent par exemple se présenter sous la forme de vecteurs d'un plan avec une composante longitudinale et une composante transversale, l'axe longitudinal étant l'axe dans lequel le véhicule considéré se déplace en ligne droite.

Avantageusement, le procédé comprend également une étape E1B de reconnaissance d'une configuration routière. Cette étape peut comprendre une reconnaissance et un positionnement dans l'espace des différentes voies de circulation dans l'environnement du véhicule V1. On peut également identifier lors de cette étape la nature même de la configuration routière. Cette nature peut être par exemple sélectionnée dans une liste de configurations routières dans laquelle pourraient figurer les ronds-points, les intersections, les voies d'insertions d'autoroute, ou encore tout autre type de configurations routières. Cette étape permet ainsi de prédire la trajectoire des différents obstacles mobiles présents dans l'environnement du véhicule. En variante, ces trajectoires pourraient être déterminées d'une manière différente, par exemple elles pourraient être communiquées au véhicule V1 via un serveur distant en liaison avec le véhicule V1. L'étape E1B pourrait être exécutée en parallèle, avant ou après l'étape E1.

Dans une deuxième étape E2, on définit une voie de circulation virtuelle VCV. Cette voie de circulation est définie par l'unité de commande électronique et mémorisée dans sa mémoire 42. Elle ne correspond pas à une voie de circulation réelle VCR1, VCR2, VCR3 ou VCC. Elle peut être définie comme une échelle unidimensionnelle ou un simple axe, éventuellement rectiligne. Avantageusement, la voie de circulation virtuelle peut être définie en fonction de la trajectoire T1 suivie par le véhicule V1, éventuellement en rendant cette trajectoire rectiligne. En outre, le véhicule V1 est positionné sur cette voie de circulation virtuelle. Par exemple, il peut être positionné à une origine de l'axe. Cette deuxième étape peut éventuellement être exécutée en parallèle de la première étape E1.

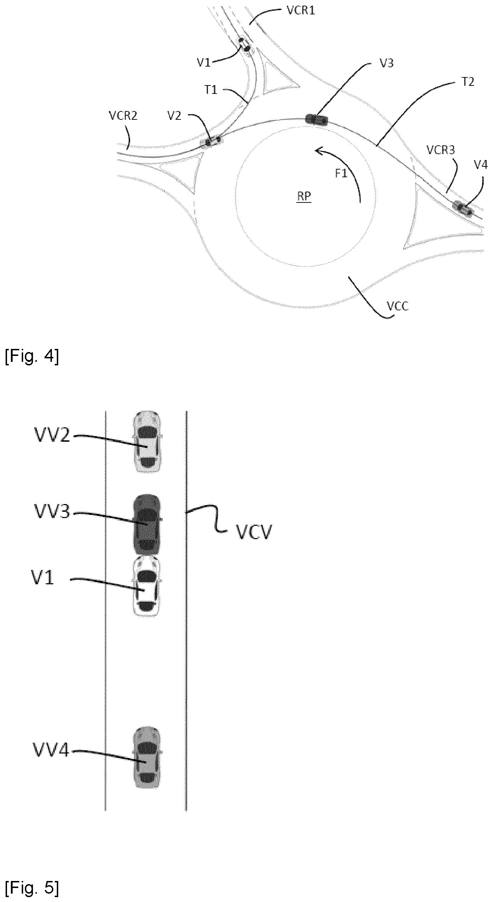

Ensuite, dans une troisième étape E3, on définit des d'obstacles virtuels VV2, VV3, VV4 par une projection des obstacles mobiles (en l'espèce les véhicules V2, V3 et V4) dans la voie de circulation virtuelle VCV. Les obstacles virtuels VV2, VV3 et VV4 correspondent donc respectivement aux véhicules V2, V3 et V4. Pour réaliser cette projection, on peut effectuer la supposition que les obstacles mobiles suivent la trajectoire T1 du premier véhicule, même si en pratique on ne connaît pas les intentions réelles des véhicules V2, V3 et V4. Cette supposition permet un contrôle plus sûr du véhicule V1 en prenant en compte le scénario le plus défavorable possible. On obtient ainsi une représentation telle qu'illustrée sur la figure 4 sur laquelle le véhicule V1 et les obstacles virtuels VV2, VV3 et VV4 sont positionnés sur une unique et même voie de circulation virtuelle VCV. Autrement dit, cette projection revient à réaliser une fusion virtuelle des différentes voies de circulation et des obstacles mobiles qui y sont présent sur la voie de circulation virtuelle.

La position de chacun des obstacles virtuels VV2, VV3 et VV4 sur la voie de circulation virtuelle VCV peut être déterminée en fonction de la position réelle de chacun des véhicules V2, V3 et V4 et en fonction de la trajectoire T2 qu'ils suivent avant de rejoindre la trajectoire T1 du véhicule V1. La trajectoire T2 peut être déterminée grâce à l'identification de la configuration routière réalisée lors de l'étape E1B. Comme illustré sur la figure 3, les véhicules V3 et V4 décrivent une courbe lorsqu'ils empruntent la voie de circulation circulaire VCC avant de rejoindre la trajectoire T1 du véhicule V1. Ainsi, en tenant compte de cette courbure, la position des obstacles virtuels VV3 et VV4 sur la voie de circulation virtuelle est un peu plus éloignée du véhicule V1 que la distance en ligne droite séparant le véhicule V1 des véhicules V3 ou V4, respectivement.

Ensuite, dans une quatrième étape E4, on détermine des positions futures de chaque obstacle virtuel dans la voie de circulation virtuelle. Les positions futures de chaque obstacle virtuel W1, W2 et VV3 peuvent être calculées en fonction des paramètres de position, de vitesse, d'accélération et de jerk de chacun des véhicules V2, V3 et V4 à un instant donné. Plus précisément, les positions futures de chaque obstacle virtuel sont extrapolées des paramètres de position, de vitesse, d'accélération et de jerk de chacun de ces véhicules à un instant donné. Ainsi si S0, V0, A0 et J0 désignent respectivement la position, la vitesse, l'accélération et le jerk d'un véhicule V2, V3 ou V4 à un instant t=0, la position du véhicule considéré S(t) à un instant t ultérieur peut être déterminé par la formule suivante :

[Math 1]

$$S(t) = S0 + V0.t + \frac{A0.t^2}{2} + \frac{J0.t^3}{6}$$

Une telle approximation est fiable tant que la valeur de t est suffisamment faible. Comme nous le verrons par la suite une valeur de t inférieure ou égale à 2 secondes permet d'obtenir une estimation fiable des positions futures des obstacles mobiles considérés. Les positions futures des obstacles mobiles ainsi calculées peuvent être projetées sur la voie de circulation virtuelle pour déterminer les positions futures des obstacles virtuels. En variante, pour simplifier le calcul ci-dessus, l'hypothèse pourrait être faite que la valeur de J0, voire même également la valeur de A0 est nulle.

Avantageusement, les positions futures des obstacles virtuels dans la voie de circulation virtuelle peuvent être déterminées en fonction de la configuration routière précédemment identifiée. De la même manière que pour l'étape E3 décrite ci-dessus, les positions futures de chacun des obstacles virtuels VV2, VV3 et VV4 sur la voie de circulation virtuelle VCV peuvent être déterminées en fonction de la trajectoire T2 suivie respectivement par les véhicules V2, V3 et V4 avant de rejoindre la trajectoire T1.

Ensuite, dans une cinquième étape E5, on détermine des délais d'interaction des obstacles virtuels W2, VV3, VV4 avec le premier véhicule V1. Un délai d'interaction peut être défini comme le délai au terme duquel l'obstacle virtuel entrerait en contact avec le véhicule V1.

Si l'obstacle virtuel est déjà en contact avec le premier véhicule V1, comme cela apparait notamment sur la figure 4 avec l'obstacle virtuel VV3, le délai d'interaction entre le véhicule V1 et l'obstacle virtuel peut être égal à zéro. Au contraire, si l'obstacle virtuel s'éloigne du véhicule V1, alors le délai d'interaction peut être infini. Une telle situation pourrait se produire par exemple si l'obstacle virtuel est positionné derrière le véhicule V1 et possède une vitesse inférieure ou égale à celle du véhicule V1 ou si l'obstacle virtuel est positionné devant le véhicule V1 et possède une vitesse supérieure ou égale à celle du véhicule V1. Le délai d'interaction entre le véhicule V1 et un véhicule environnant le véhicule V1 peut être calculé en divisant la distance séparant ces deux véhicules par la vitesse à laquelle ces deux véhicules se rapprochent.

Dans une sixième étape E6, on contrôle le véhicule V1 en fonction des délais d'interaction des obstacles virtuels précédemment calculés. Notamment, on peut agir sur les moyens de contrôle 3 de sorte à maximiser le délai d'interaction minimum parmi l'ensemble des délais d'interaction calculés. En référence aux figures 4 et 5, le véhicule V1 doit ralentir légèrement pour faire augmenter le délai d'interaction avec l'obstacle virtuel W3. On peut ainsi contrôler le véhicule V1 de sorte à ce qu'il se positionne entre les obstacles virtuels VV3 et VV4 et que les délais d'interactions du véhicule V1 avec les obstacles virtuels VV3 et VV4 soient sensiblement égaux.

Grâce à l'invention, on parvient donc à positionner le véhicule V1 et à lui donner une vitesse optimale pour s'insérer entre le véhicule V3 et V4. Ce contrôle du véhicule V1 intervient en amont du lieu d'intersection entre la voie de circulation sur laquelle circule le véhicule V1 et la voie de circulation sur laquelle circulent les véhicules V2, V3, V4. On parvient ainsi à réaliser une insertion du véhicule V1 fluide et confortable pour les passagers. De plus, l'allure et la position qu'adopte le véhicule V1 est bien compréhensible pour les autres automobilistes : ils comprennent facilement l'intention du véhicule V1, avant même que celui-ci soit inséré sur la voie de circulation circulaire du rond-point. Ainsi, le conducteur du véhicule V4 peut comprendre que le véhicule V1 va s'insérer devant lui et ralentir légèrement, ce qui augmente encore les délais d'interaction et améliore la sécurité. Grâce à l'invention, on évite donc que le premier véhicule freine intempestivement ce qui pourrait surprendre les véhicules circulant derrière lui ou les véhicules déjà engagés sur le rond-point qui s'attendaient à voir passer le premier véhicule devant eux.

Avantageusement, le procédé peut comprendre une septième étape E7 de définition d'une unique cible virtuelle parmi l'ensemble d'obstacles virtuels. Cette cible virtuelle peut être l'obstacle virtuel situé juste devant le véhicule V1 dans la voie de circulation virtuelle. Selon la configuration de la figure 3, c'est l'obstacle virtuel VV3 qui peut être défini comme cible virtuelle. Ensuite, l'étape de contrôle est configurée pour que le véhicule V1 suive la cible virtuelle dans la voie de circulation virtuelle, en maintenant une distance de sécurité avec cette cible virtuelle. On peut ainsi maintenir une distance de sécurité sensiblement constante avec la cible virtuelle sélectionnée. La régulation de vitesse du véhicule V1 peut être mise en oeuvre sur la base d'un régulateur de vitesse adaptatif apte à adapter la vitesse du véhicule V1 en fonction d'un véhicule réel précédent le véhicule V1, le véhicule réel étant alors remplacé par l'obstacle virtuel sélectionné comme cible virtuelle. On peut donc s'appuyer sur un dispositif et un procédé de régulation connu pour contrôler la vitesse du véhicule V1, même en l'absence d'un véhicule réel positionné devant lui et dans la même voie de circulation que lui.

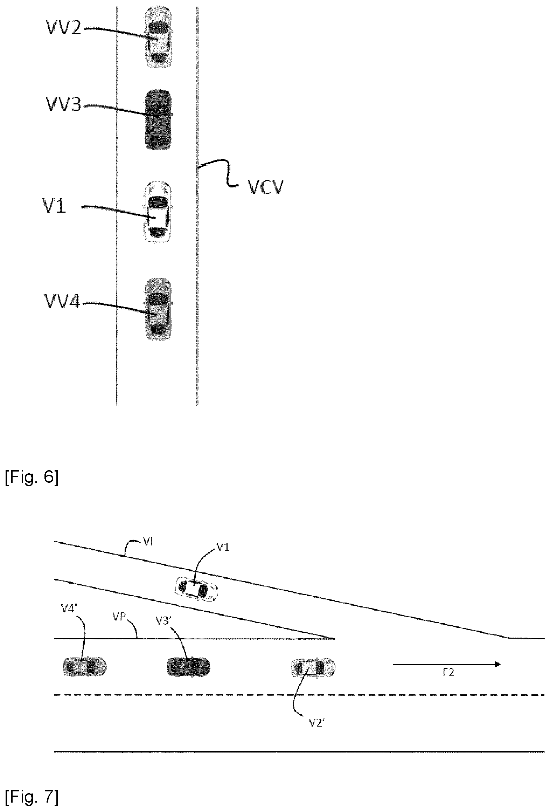

On illustre à présent les performances du procédé de contrôle à l'appui des figures 6, 7, 8 et 9. La figure 6 illustre une deuxième configuration routière dans laquelle le véhicule V1 circule sur une voie d'insertion VI débouchant sur une voie de circulation principale. Les véhicules V2', V3' et V4' circulent sur la voie de circulation principale et sont positionnés les uns derrière les autres. On considère que véhicules V2', V3' et V4' sont prioritaires sur le véhicule V1. Le sens de circulation est indiqué par une flèche F2. De la même manière que précédemment, on définit une voie de circulation virtuelle et des obstacles virtuels correspondant à chacun des véhicules V2', V3' et V4' par une projection de ces véhicules dans la voie de circulation virtuelle.

Sur le graphique de la figure 7, on représente sur une même échelle de temps la distance en valeur relative séparant chaque obstacle mobile et chaque obstacle virtuel du véhicule V1 à un instant présent. On obtient ainsi trois courbes C12, C13 et C14, en traits pointillés, correspondant respectivement aux distances réelles séparant le véhicule V1 des véhicules V2', V3' et V4'. Sur ce même graphique, on représente également la distance séparant chaque obstacle virtuel du véhicule V1 à un instant futur de deux secondes, la position future de chaque obstacle virtuel étant déterminée d'après la formule Math1 décrite ci-dessus. On obtient ainsi trois courbes C22, C23 et C24 en traits pleins correspondant respectivement aux trois véhicules V2', V3' et V4'. On observe que courbes C22, C23 et C24 sont sensiblement superposées aux courbes C12, C13 et C14, respectivement. Ainsi la prédiction des positions futures des obstacles virtuels avec un horizon de deux secondes est bel et bien fiable. Au cours du procédé la distance séparant les obstacles virtuels correspondant aux véhicules V2' et V3' augmente. Le véhicule V1 se positionne sensiblement à mi-distance entre les obstacles virtuels correspondant aux véhicules V2' et V3'. On observe que la distance séparant le véhicule V1 du véhicule V3' diminue avant de ré-augmenter. Ceci se produit car le conducteur du véhicule V3' comprend que le véhicule V1 va s'insérer devant lui et ralentit pour laisser une distance de sécurité suffisante.

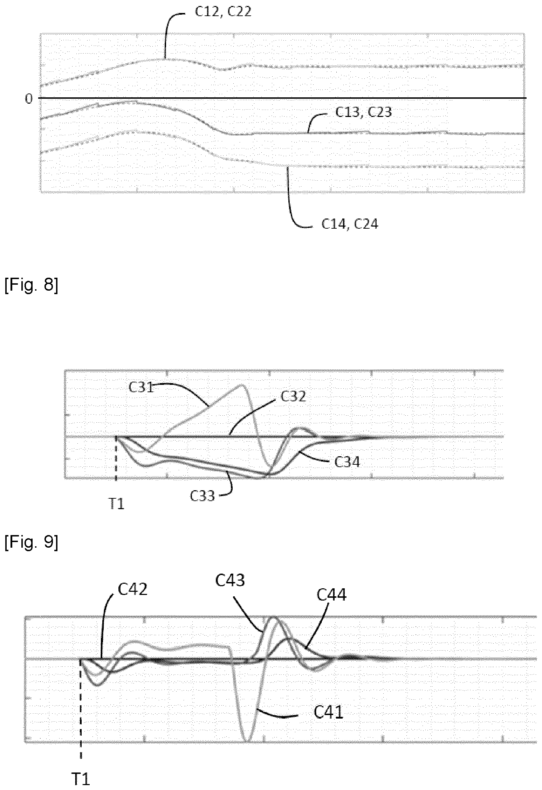

Sur le graphique de la figure 8, on a représenté sur une même échelle de temps que sur le graphique de la figure 7, la vitesse du véhicule V1 et la vitesse des obstacles mobiles correspondant aux véhicules V2', V3' et V4' respectivement par des courbes C31, C32, C33 et C34. De même, sur la figure 9, on a représenté sur une même échelle de temps que sur le graphique de la figure 7, l'accélération du véhicule V1 et l'accélération des obstacles mobiles correspondant aux véhicules V2', V3' et V4' respectivement par des courbes C41, C42, C43 et C44. A l'instant t= T1, l'étape E6 de contrôle du véhicule V1 est mise en oeuvre : le véhicule V1 accélère pour se positionner entre les obstacles virtuels correspondant aux véhicules V2' et V3'. Ensuite, l'obstacle virtuel correspondant au véhicule V2' est défini comme cible virtuelle. La vitesse du véhicule V1 se stabilise de sorte à suivre cette cible virtuelle.

**Revendications**

1. Procédé de contrôle automatique d'un premier véhicule (V1) automobile, comprenant :

    - une étape (E1) de détection d'un ensemble d'obstacles mobiles (V2, V3, V4) environnant le premier véhicule,

- une étape (E2) de définition d'une voie de circulation virtuelle (VCV), puis
- une étape (E3) de définition d'obstacles virtuels (W2, VV3, VV4) par une projection des obstacles mobiles dans la voie de circulation virtuelle, **caractérisé en ce qu'**il comprend :
- une étape (E4) de détermination de positions futures des obstacles virtuels dans la voie de circulation virtuelle,
- une étape (E5) de détermination de délais d'interaction des obstacles virtuels avec le premier véhicule,
- une étape (E6) de contrôle du premier véhicule en fonction des délais d'interaction des obstacles virtuels avec le premier véhicule,

les positions futures d'un obstacle virtuel (VV2, VV3, VV4) dans la voie de circulation virtuelle (VCV) étant déterminées en fonction de données de position, de vitesse, d'accélération et de jerk d'un obstacle mobile (V2, V3, V4) correspondant l'obstacle virtuel, à un instant donné.

2. Procédé de contrôle selon la revendication précédente, **caractérisé en ce que** l'étape de contrôle est configurée pour que le premier véhicule (V1) se positionne entre deux obstacles virtuels (W3, W4).

3. Procédé de contrôle selon l'une des revendications précédentes, **caractérisé en ce qu'**il comprend une étape (E7) de définition d'une unique cible virtuelle parmi l'ensemble d'obstacles virtuels (VV2) et **en ce que** l'étape (E6) de contrôle est configurée pour que le premier véhicule suive la cible virtuelle dans la voie de circulation virtuelle.

4. Procédé de contrôle selon l'une des revendications précédentes, **caractérisé en ce qu'**il comprend une étape (E1B) de reconnaissance d'une configuration routière et **en ce que** les positions futures des obstacles virtuels dans la voie de circulation virtuelle (VCV) sont déterminées en fonction de ladite configuration routière.

5. Procédé de contrôle selon l'une des revendications précédentes, **caractérisé en ce que** l'étape (E6) de contrôle du premier véhicule (V1) est une étape d'insertion du premier véhicule dans une voie de circulation (VCC), les obstacles mobiles (V2, V3, V4) présents dans la voie de circulation étant prioritaires sur le premier véhicule.

6. Procédé de contrôle selon l'une des revendications précédentes, **caractérisé en ce que** l'étape (E6) de contrôle du premier véhicule (V1) est une étape d'insertion du premier véhicule dans une voie de circulation circulaire d'un rond-point.

7. Véhicule (V1) automobile, **caractérisé en ce qu'**il comprend des moyens de détection (2) automatique de l'environnement, des moyens de contrôle (3) automatique de la vitesse et de la direction du véhicule, le véhicule étant configuré pour mettre en oeuvre le procédé de contrôle selon l'une des revendications précédentes.

8. Produit programme d'ordinateur comprenant des instructions de code de programme enregistrées sur un support lisible par ordinateur pour mettre en oeuvre les étapes du procédé selon l'une quelconque des revendications 1 à 6 lorsque ledit programme fonctionne sur un ordinateur.

9. Support d'enregistrement de données (42), lisible par un ordinateur, sur lequel est enregistré un programme d'ordinateur comprenant des instructions de code de programme de mise en oeuvre du procédé selon l'une des revendications 1 à 6.

**Patentansprüche**

1. Verfahren zur automatischen Steuerung eines ersten Kraftfahrzeugs (V1), umfassend:

- einen Schritt (E1) des Erkennens einer Menge von beweglichen Hindernissen (V2, V3, V4), die das erste Fahrzeug umgeben,
- einen Schritt (E2) des Definierens einer virtuellen Fahrspur (VCV), dann
- einen Schritt (E3) des Definierens von virtuellen Hindernissen (VV2, W3, VV4) durch eine Projektion der beweglichen Hindernisse in die virtuelle Fahrspur, **dadurch gekennzeichnet, dass** es umfasst:

- einen Schritt (E4) des Bestimmens von zukünftigen Positionen der virtuellen Hindernisse in der virtuellen Fahrspur,
- einen Schritt (E5) des Bestimmens von Interaktionszeiten der virtuellen Hindernisse mit dem ersten Fahrzeug,

- einen Schritt (E6) des Steuerns des ersten Fahrzeugs in Abhängigkeit von den Interaktionszeiten der virtuellen Hindernisse mit dem ersten Fahrzeug, wobei die zukünftigen Positionen eines virtuellen Hindernisses (W2, VV3, VV4) in der virtuellen Fahrspur (VCV) in Abhängigkeit von Positions-, Geschwindigkeits-, Beschleunigungs- und Ruckdaten eines beweglichen Hindernisses (V2, V3, V4), das dem virtuellen Hindernis entspricht, zu einem gegebenen Zeitpunkt bestimmt werden.

2. Verfahren zur Steuerung nach dem vorhergehenden Anspruch, **dadurch gekennzeichnet, dass** der Schritt des Steuerns so ausgestaltet ist, dass das erste Fahrzeug (V1) sich zwischen zwei virtuellen Hindernissen (W3, VV4) positioniert.

3. Verfahren zur Steuerung nach einem der vorhergehenden Ansprüche, **dadurch gekennzeichnet, dass** es einen Schritt (E7) des Definierens eines einzigen virtuellen Ziels unter der Menge von virtuellen Hindernissen (VV2) umfasst und dass der Schritt (E6) des Steuerns so ausgestaltet ist, dass das erste Fahrzeug dem virtuellen Ziel in der virtuellen Fahrspur folgt.

4. Verfahren zur Steuerung nach einem der vorhergehenden Ansprüche, **dadurch gekennzeichnet, dass** es einen Schritt (E1B) des Erkennens einer Straßenkonfiguration umfasst und dass die zukünftigen Positionen der virtuellen Hindernisse in der virtuellen Fahrspur (VCV) in Abhängigkeit von der Straßenkonfiguration bestimmt werden.

5. Verfahren zur Steuerung nach einem der vorhergehenden Ansprüche, **dadurch gekennzeichnet, dass** der Schritt (E6) des Steuerns des ersten Fahrzeugs (V1) ein Schritt des Einfügens des ersten Fahrzeugs in eine Fahrspur (VCC) ist, wobei die sich in der Fahrspur befindenden beweglichen Hindernisse (V2, V3, V4) Vorrang vor dem ersten Fahrzeug haben.

6. Verfahren zur Steuerung nach einem der vorhergehenden Ansprüche, **dadurch gekennzeichnet, dass** der Schritt (E6) des Steuerns des ersten Fahrzeugs (V1) ein Schritt des Einfügens des ersten Fahrzeugs in eine kreisförmige Fahrspur eines Kreisverkehrs ist.

7. Kraftfahrzeug (V1), **dadurch gekennzeichnet, dass** es Mittel (2) zur automatischen Erkennung des Umfelds, Mittel (3) zur automatischen Steuerung der Geschwindigkeit und der Lenkung des Fahrzeugs umfasst, wobei das Fahrzeug dazu ausgestaltet ist, das Verfahren zur Steuerung nach einem der vorhergehenden Ansprüche auszuführen.

8. Computerprogrammprodukt, das Programmcodeanweisungen umfasst, die auf einem computerlesbaren Medium gespeichert sind, um die Schritte des Verfahrens nach einem der Ansprüche 1 bis 6 auszuführen, wenn das Programm auf einem Computer läuft.

9. Computerlesbares Datenspeichermedium (42), auf dem ein Computerprogramm gespeichert ist, das Programmcodeanweisungen zum Ausführen des Verfahrens nach einem der Ansprüche 1 bis 6 umfasst.

**Claims**

1. Method for automatically controlling a first motor vehicle (V1), comprising:

    - a step (E1) of detecting a set of moving obstacles (V2, V3, V4) surrounding the first vehicle,
    - a step (E2) of defining a virtual traffic lane (VCV), then
    - a step (E3) of defining virtual obstacles (W2, W3, W4) by projecting the moving obstacles into the virtual traffic lane, **characterized in that** it comprises:

        - a step (E4) of determining future positions of the virtual obstacles in the virtual traffic lane,
        - a step (E5) of determining times to interaction of the virtual obstacles with the first vehicle,
        - a step (E6) of controlling the first vehicle depending on the times to interaction of the virtual obstacles with the first vehicle, the future positions of a virtual obstacle (W2, W3, W4) in the virtual traffic lane (VCV) being determined depending on position, speed, acceleration and jerkiness data of a moving obstacle (V2, V3, V4) corresponding to the virtual obstacle, at a given time.

2. Control method according to the preceding claim, **characterized in that** the controlling step is configured so that the first vehicle (V1) is positioned between two virtual obstacles (VV3, VV4).

3. Control method according to one of the preceding claims, **characterized in that** it comprises a step (E7) of defining a single virtual target (VV2) among the set of virtual obstacles and **in that** the controlling step (E6) is configured so that the first vehicle follows the virtual target in the virtual traffic lane.

4. Control method according to one of the preceding claims, **characterized in that** it comprises a step (E1B) of recognizing a road configuration and **in that** the future positions of virtual obstacles in the virtual traffic lane (VCV) are determined depending on said road configuration.

5. Control method according to one of the preceding claims, **characterized in that** the step (E6) of controlling the first vehicle (V1) is a step of the first vehicle entering a traffic lane (VCC), the moving obstacles (V2, V3, V4) present in the traffic lane being given priority over the first vehicle.

6. Control method according to one of the preceding claims, **characterized in that** the step (E6) of controlling the first vehicle (V1) is a step of the first vehicle entering a circular traffic lane of a roundabout.

7. Motor vehicle (V1), **characterized in that** it comprises means (2) for automatically detecting the environment, and means (3) for automatically controlling the speed and direction of the vehicle, the vehicle being configured to implement the control method according to one of the preceding claims.

8. Computer program product comprising program-code instructions recorded on a computer-readable medium for implementing the steps of the method according to any one of Claims 1 to 6 when said program is run on a computer.

9. Computer-readable data recording medium (42) on which is recorded a computer program comprising program-code instructions for implementing the method according to one of Claims 1 to 6.

[Fig. 1]

[Fig. 2]

[Fig. 3]

[Fig. 4]

[Fig. 5]

[Fig. 6]

[Fig. 7]

C12, C22

0

C13, C23

C14, C24

[Fig. 8]

C31

C32

C34

C33

T1

[Fig. 9]

C42

C43

C44

C41

T1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2558051 A
- US 2018354518 A